# EUROPÄISCHE PATENTSCHRIFT

(11) **EP 0 356 875 B1**
(45) Veröffentlichungstag und Bekanntmachung des Hinweises auf die Patenterteilung: **05.05.1993**
(21) Anmeldenummer: 89115431.2
(22) Anmeldetag: 22.08.1989
(51) Int. Cl.: C08F 4/00, C09D 157/00

(54) **Neue radikalisch polymerisierbare Mehrstoffgemische und ihre Verwendung (I)**
Radical polymerizable compositions and their use
Compositions polymérisables par radicaux et leur utilisation

(30) Priorität: 31.08.1988 DE 3829438
(43) Veröffentlichungstag der Anmeldung: 07.03.1990
(73) Patentinhaber: Henkel Kommanditgesellschaft auf Aktien, 40191 Düsseldorf (DE)
(72) Erfinder: Huver, Thomas, Dr., D-4000 Düsseldorf 12 (DE); Fischer, Herbert, Dr., D-4000 Düsseldorf 13 (DE); Emmerling, Winfried, Dr., D-4006 Erkrath 2 (DE)

(56) Entgegenhaltungen:
- FR-A- 1 242 899
- DIE MAKROMOLEKULARE CHEMIE, Band 93, 1966, Seiten 69-108, Basel, CH; L. HORNER et al.: "Autoxydationsstudien an N,N-dialkylierten Anilinderivaten"

## Beschreibung

Die Erfindung betrifft neue formgebend verarbeitbare radikalisch polymerisierbare Mehrstoffgemische, die beispielsweise als fließ-bzw. streichfähige oder als pastöse Massen zum Einsatz kommen und dann unter Umgebungsbedingungen und Auslösung der Polymerisationsreaktion aushärten. Anwendungstechnisch gesehen betrifft die Erfindung dabei nahezu alle Gebiete des Einsatzes radikalisch polymerisierbarer bzw. härtbarer Massen. Beispielhaft seien erwähnt Klebstoffe, Dichtungsmassen, der gezielte Aufbau von Kunststofformteilen, die Oberflächenbeschichtung mit lufthärtenden insbesondere lösungsmittelfreien Lacksystemen und dergleichen.

Die Peroxid- bzw. Hydroperoxid-initiierte Härtung olefinisch ungesättigter Systeme bedarf insbesondere dann aus mehreren Komponenten zusammengesetzter Aktivatorsysteme, wenn die Reaktionsauslösung bei niederen Temperaturen beispielsweise bei Raumtemperatur oder nur schwach erhöhten Temperaturen erfolgen soll. Bekannt ist, daß ausgewählten tertiären Aminverbindungen mit partieller aromatischer Substitution am N-Atom eine solche Aktivatorfunktion zukommt. Bekannte Aktivatoren für die Polymerisationsauslösung beispielsweise mittels Benzoylperoxid sind insbesondere Dimethylanilin und Dimethyl-p-Toluidin.

Eine ganz andere bekannte Aktivatorklasse für die oxidative Polymerisationsauslösung bestimmter ungesättigter Systeme, nämlich trocknender Öle, sind im System wenigstens anteilsweise lösliche Metallverbindungen solcher Metalle, die mit mehreren Wertigkeitsstufen auftreten können und über intermediär auftretende Wertigkeitsverschiebungen bei Interaktion mit weiteren Komponenten des System die Startreaktion beschleunigen. Schon seit langem sind derartige in organischen Lösungsmitteln und/oder in Bindemitteln hinreichend lösliche Metallverbindungen solcher Metalle als sogenannte Trockenstoffe zur Lufttrocknung von Anstrichmitteln, Firnissen und dergleichen auf Basis ungesättigter Öle bekannt. In Betracht kommen hier insbesondere hinreichend öllösliche Verbindungen solcher Übergangsmetalle, die zum Auftreten in mehreren Wertigkeitsstufen befähigt sind. Die Fähigkeit zur Härtungsbeschleunigung ist bei den einzelnen Komponenten unterschiedlich stark ausgeprägt, vornehmlich kommen Verbindungen des Kobalts und/oder des Mangans in Betracht, aber auch Eisen wirkt härtungsbeschleunigend. Daneben und insbesondere in Kombination mit diesen hochwirksamen metallischen Komponenten können vergleichbare Verbindungen anderer Metalle eingesetzt werden, die gegebenenfalls auch zur Ausbildung mehrerer Wertigkeitsstufen befähigt sind. Eine ausführliche Darstellung solche Systeme findet sich beispielsweise in "Ullmann, Encyklopädie der technischen Chemie", 4. Auflage, Band 23 (1983), 421 bis 424.

Bekannt ist weiterhin, daß die beiden hier geschilderten Typen von Promotoren für die radikalische Polymerisationsauslösung durch Interaktion zu einer Wirkungsverstärkung führen können. So betrifft beispielsweise die Veröffentlichung von L. HORNER et al. "Autoxidationsstudien an N,N-dialkylierten Anilinderivaten", Makromolekulare Chemie 93 (1966), 69 bis 108, Untersuchungen zur Beschleunigung der spontanen Autoxidation solcher N-dialkylsubstituierter Arylaminverbindungen in reinem hochtrockenen Sauerstoffgas. In der ersten Stufe der spontanen Autoxidation bildet sich bei Einwirkung von getrocknetem Reinstsauerstoff die Aminhydroperoxidverbindung an alpha-ständigen aliphatischen CH-Gruppen. Diese spontane Autoxidation der N,N-dialkylierten Arylamine verläuft nur langsam. Die Mitverwendung von Kobalt-II-Verbindungen und in geringerem Maß die Mitverwendung von Eisen-III-Salzen führt nach den Angaben dieser Veröffentlichung zur Aktivierung der Autoxidation. in weiteren Arbeiten dieser Veröffentlichung wird gezeigt, daß auch der Essigsäure eine ausgesprochene Beschleunigungswirkung der Autoxidation an der tert.-Aminverbindung zuzusprechen ist, stärkere Säuren wie Trichloressigsäure oder Mineralsäuren bilden dagegen echte tert.-Ammoniumsalze, die nicht autoxidabel sind. Der gemeinsame Einsatz von Kobaltionen und Essigsäure führt unter Einwirkung von Reinstsauerstoff zur lebhaft katalysierten Autoxidation von Dialkylanilinverbindungen.

Die zitierte Veröffentlichung beschreibt schließlich einige Untersuchungen zur Auslösung der Polymerisation von Vinylverbindungen durch das System Dimethylanilin/Reinst-Sauerstoff/Kobaltsalz. Mit diesem System können jeweils hochreines Acrylnitril, Methylmethacrylat, Ethylacrylat und Styrol polymerisiert werden. Die Startreaktion wird als Redoxkatalyse gedeutet, bei der molekularer Sauerstoff die Rolle des Oxidationsmittels übernimmt. Irgendwelche Hinweise auf eine praktische Brauchbarkeit der untersuchten Mehrstoffsysteme für den Einsatz in der Polymerisationstechnik finden sich in der genannten Veröffentlichung nicht. Tatsächlich haben aber auch diese seit nahezu 25 Jahren der Fachwelt zugänglichen theoretischen Arbeiten keinen Anstoß zu ihrer Umsetzung in die Praxis gegeben.

Die Erfindung geht von der Aufgabe aus, unter Benutzung des geschilderten vorbekannten Wissens zu mehrkomponentigen Redoxsystemen eine neue Klasse von Aktivatorsystemen zu entwicklen, die zur Polymerisationsauslösung an olefinisch ungesättigten Systemen in neuartiger und vereinfachter Weise Einsatz finden können. Die neuen Aktivatorsysteme sollen bei Ausschluß von Sauerstoff und Wasser zu nicht-reaktiven Stoffgemischen führen, die in Abmischung mit den olefinisch ungesättigten polymerisierbaren Komponenten nicht polymerisieren und somit lagerfähig sind, und zwar sowohl in Form von einkomponentigen Systemen wie auch in Form von mehrkomponentigen Systemen. Den neuen Aktivatorsystemen soll andererseits die Fähigkeit immanent sein, durch Zutritt von Wasser und Sauerstoff aktivierbar zu sein. Diese Aktivierung soll in bevorzugten Ausführungsformen schon bei Raumtemperatur eintreten, gegebenenfalls ist eine mäßige Temperaturerhöhung vorgesehen. Ein besonders wichtiger Aspekt der Erfindung richtet sich auf Mehrstoffsysteme der genannten Art, die einfach durch Zutritt von Umgebungsluft mit ihrem stets vorhandenen Gehalt an Feuchtigkeit und Sauerstoff bei Raumtemperatur oder nur mäßig erhöhten Temperaturen zur Auslösung der Startreaktion einer radikalischen Polymerisation ungesättigter Systeme befähigt sind.

Gegenstand der Erfindung sind dementsprechend in einer ersten Ausführungsform formgebend verarbeitbare radikalisch polymerisierbare Mehrstoffgemische enthaltend
ethylenisch ungesättigte polymerisierbare Verbindungen gewünschtenfalls in Abmischung mit löslichen und/oder unlöslichen Füllstoffen sowie
ein durch Sauerstoffzutritt initiierbares Aktivatorsystem
wobei das Kennzeichen der Erfindung darin liegt, daß diese Mehrstoffgemische ein durch Zutritt von Sauerstoff und Wasser, insbesondere durch Einwirkung von Umgebungsluft initiierbares Aktivatorsystem auf Basis der nachfolgenden Hauptkomponenten enthält:
N-alkylsubstituierte tert.-Arylamine mit wenigstens einer alpha-ständigen aliphatischen CH-Bindung
im System wenigstens anteilsweise lösliche Metallverbindungen für die Trocknungsbeschleunigung ungesättigter Öle sowie
bei Feuchtigkeitszutritt zur freien Carbonsäure hydrolysierbare Verbindungen schwach saurer Carbonsäuren mit pK_{S}-Werten nicht kleiner als etwa 0,9.

Der Kern des erfindungsgemäßen Handelns liegt damit in der Auswahl des bestimmten und in dieser Kombination erstmalig beschriebenen Aktivatorsystems. Dieses System unterscheidet sich von den durch L. HORNER et al. beschriebenen Aktivatorsysteme insbesondere durch die Auswahl der dritten zuvor beschriebenen Komponente. Erfindungsgemäß liegt nicht - wie bei der von HORNER untersuchten Essigsäure - die freie Carbonsäure als solche vor, es werden vielmehr Carbonsäurederivate eingesetzt, die als solche keine freie Carboxylgruppe aufweisen, jedoch bei Feuchtigkeitszutritt zur freien Carbonsäure hydrolysierbar sind. Die sich damit für die Praxis ableitenden Vereinfachungen und erweiterten Arbeitsmöglichkeiten leuchten sofort ein:
Der zur Polymerisationsauslösung im erfindungsgemäßen Sinne geforderte Aktivierungszustand benötigt das Zusammenwirken des aromatischen Amins und der im System wenigstens anteilsweise löslichen Metallverbindung mit der freien Carbonsäure. Dadurch, daß die freie Carbonsäure aber nicht als solche, sondern in verkappter Form eingebracht wird, wird ein zusätzlicher Freiheitsgrad bezüglich der Inhibierung des Gesamtsystems geschaffen. Der vollständige Ausschluß von Sauerstoff bzw. die entsprechende Beseitigung von Sauerstoff aus Mehrstoffgemischen ist bekanntlich im Rahmen des praktisch technischen Handelns nicht sinnvoll zu verwirklichen. Startersysteme, die molekularen Sauerstoff in eine reaktionsauslösende Zwischenstufe überführen - bzw. solche Startersysteme enthaltende polymerisierbare Stoffgemische - sind immer vergleichsweise durch unerwünschte Nebenreaktionen gefährdet. Die erfindungsgemäß gegebene Möglichkeit zur zusätzlichen Systeminhibierung durch Feuchtigkeitsausschluß erhöht die Sicherheit bei der Herstellung, der Handhabung, der Lagerung und beim Einsatz der luftempfindlichen Systeme. Durch geeignete Hilfsmaßnahmen, die nachfolgend noch geschildert werden, können die hier gegebenen Freiheitsgrade noch vergrößert werden. Möglich wird damit insbesondere auch die einkomponentige Herstellung und Lagerung der polymerisierbaren Massen als nicht-reaktives 1-Komponenten-Gemisch. Durch einfachen Luftzutritt bei Umgebungstemperatur oder äußerstenfalls mäßig erhöhten Temperaturen gelingt die Aktivierung des Startersystems und damit die Reaktionsauslösung im Gesamtsystem zur formstabilen Aushärtung. Der für die formgebende Verarbeitung benötigte offene Zeitraum des Systems kann durch weitere noch geschilderte Maßnahmen des erfindungsgemäßen Handelns weitgehend frei bestimmt werden. Erfindungsgemäß zusammengestellte Mehrstoffsysteme bekommen damit praktische Bedeutung im weitesten anwendungstechnischen Sinne.

Im nachfolgenden werden zunächst die drei Hauptkomponenten des erfindungsgemäß verwendeten Aktivatorsystems im einzelnen beschrieben.

### N-alkylsubstituierte tert.-Arylamine

Geeignet sind alle entsprechenden Verbindungen mit wenigstens einer alpha-ständigen aliphatischen CH-Bindung. Die erfindungsgemäß eingesetzten Aminkomponenten entsprechen insbesondere der nachfolgenden allgemeinen Formel I 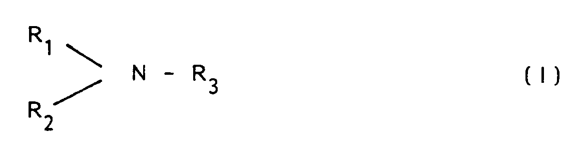
in der R₁ einen gegebenenfalls substituierten Arylrest bedeutet, R₂ die Bedeutung von R₁ hat oder aber auch einen gegebenenfalls substituierten Alkylrest bedeutet. Dieser Alkylrest kann dabei geradkettig oder verzweigt sein. R₃ bedeutet einen geradkettigen oder verzweigten Alkylrest, der auch substituiert sein kann, dem in R₂ gegebenenfalls vorliegenden Alkylrest gleich oder von ihm verschieden ist, sich jedoch auf jeden Fall dadurch auszeichnet, daß in Alpha-Stellung zum N wenigstens ein H-Atom vorliegt.

Der bevorzugte Arylrest ist der Phenylrest, der seinerseits auch substituiert sein kann, und zwar insbesondere alkylsubstituiert sein kann. Die in R₃ und gegebenenfalls R₂ vorliegenden Alkylreste enthalten bevorzugt jeweils bis zu etwa 10 insbesondere bis zu etwa 6 C-Atome. Entsprechenden C₁₋₃-Resten und hier insbesondere wiederum dem Methylrest kommen besondere Bedeutung zu. In einer bevorzugten Ausführungsform sind die Reste R₂ und R₃ entsprechende gegebenenfalls substituierte Alkylreste und der Rest R₁ ein gegebenenfalls substituierter Phenylrest, so daß N,N-dialkylsubstituierten Anilinverbindungen, die auch im Phenylring alkyliert sein können im allgemeinen der Vorzug gegeben wird. Die wichtigsten Komponenten im erfindungsgemäßen Sinne sind das Dimethylanilin und insbesondere das Dimethyl-p-Toluidin.

Grundsätzlich gelten für die Aktivität bzw. die Aktivierbarkeit dieser tert.-Aminverbindungen die von L. HORNER et al. a. a. O. angegebenen Gesetzmäßigkeiten: Kernsubstituenten beeinflussen die Autoxidationsgeschwindigkeit des Dimethylanilins. Elektronendonatoren erhöhen die Autoxidabilität des Amins, elektrophile Substituenten setzen sie herab. p-Toluidinverbindungen sind dementsprechend reaktiver als die sonst strukturgleichen Anilinderivate. Auch bezüglich der Alkylsubstituenten in R₃ und gegebenenfalls R₂ gelten die von HORNER angegebenen allgemeinen Gesetzmäßigkeiten. Die Methylgruppe ist der Oxidation zum Hydroperoxid ungleich leichter zugänglich als alle anderen N-Alkylsubstituenten. Grundsätzlich gelten hier auch die bekannten Ergebnisse aus der Einwirkung von Dibenzoylperoxid auf tertiäre Amine wie sie in der zitierten Literaturstelle referiert sind.

### Im System wenigstens anteilsweise lösliche Metallverbindungen

Wie bereits ausgeführt, zeichnen sich die wichtigstens Trockenstoffe der betroffenen Art dadurch aus, daß vor allem Metallverbindungen solcher Metalle eingesetzt werden, die in mehreren Wertigkeitsstufen auftreten können. Besonders aktiv können hier ausgewählte Vertreter der Übergangsmetalle sein. Der jeweiligen Auswahl des Metalls kann unter anderem geschwindigkeitsbestimmender Charakter zur Polymerisationsauslösung aufgrund einer gewissen Temperaturabhängigkeit des reaktiven Eingriffs dieser Metallkomponente in das Gesamtgeschehen zukommen. Bei Raumtemperatur hochaktive Komponenten leiten sich insbesondere vom Kobalt und/oder Mangan ab. Auch dem Eisen kommt im Bereich von Raumtemperatur eine gewisse - wenn auch schwächere - Reaktionsbeschleunigung zu. Andere Metallkomponenten beispielsweise solche auf Basis von Vanadium können durch Temperaturerhöhung in ihrer Aktivität so gesteigert werden, daß kurzfristig die Polymerisationsreaktion ausgelöst werden kann.

Für das für viele Anwendungsgebiete besonders vorteilhafte Arbeiten bei Raumtemperatur eignen sich insbesondere Kobalt-und/oder Manganverbindungen, gegebenenfalls in Abmischung mit weiteren metallischen Komponenten wie Verbindungen des Blei, Cer, Calcium, Barium, Zink und/oder Zirkon. Es kann hier auf die einschlägige Fachliteratur verwiesen werden, vergleiche beispielsweise die zitierte Veröffentlichung in "Ullmann" a .a. O. sowie die dort angegebene Vor-Literatur.

Die hier betroffenen Metalle werden in Form solcher Verbindungen eingesetzt, daß sie wenigstens anteilsweise im Gesamtsystem löslich sind. Es kommen dabei sowohl seifenartige Metallverbindungen als auch in anderer Form insbesondere komplex an organische Reste gebundene Typen in Betracht. Typische Beispiele für das Arbeiten im Sinne des erfindungsgemäßen Handelns ist die Verwendung entsprechender Metallnaphthenate bzw. Metallacetylacetonate. Besteht eine hinreichende Löslichkeit von anorganischen Salzen im System dann ist allerdings auch die Verwendung solcher anorganischer Systeme möglich. Ein typisches Beispiel hierfür ist das Eisenchlorid, das bei seinem Einsatz im erfindungsgemäßen System eine deutlich beschleunigende Wirkung zeigt.

Es kann zweckmäßig sein, die Metallverbindungen jeweils in einer niedrigen Wertigkeitsstufe des Metalls - beispielsweise also als Kobalt (II) oder Mangan (II) - einzusetzen. In anderen Fällen eignet sich auch die Verwendung der Metallverbindung in der höheren Wertigkeitsstufe des Metalls. So wird beispielsweise Eisenchlorid bevorzugt in Form des Fe³⁺-Salzes verwendet.

### Verkappte, bei Feuchtigkeitszutritt hydrolysierbare Carbonsäureverbindung

Entscheidende Bedeutung kommt bei der Auswahl dieser Komponenten zunächst der Azidität der freien Carbonsäure zu. Der pK_{S}-Wert der freien Säure soll nicht kleiner sein als etwa 0,9, der bevorzugte Grenzwert liegt bei etwa 1.

Werden deutlich stärker saure Komponenten verwendet, dann kommt die Reaktionsbeschleunigung zum Stillstand. Ersichtlich wird das an den folgenden Beispielen: Der pK_{S}-Wert der Trichloressigsäure liegt bei etwa 0,6. Der Zusatz von Trichloressigsäure in verkappter oder unverkappter Form zum System zerstört die Fähigkeit des erfindungsgemäß eingesetzten Initiator-Mehrstoffsystems zur Auslösung von Polymerisationsreaktionen. Dichloressigsäure ist demgegenüber eine schwächere Carbonsäure. Ihr pK_{S}-Wert liegt bei etwa 1,3. Diese Dichloressigsäure ist zur Auslösung von Polymerisationsreaktionen im Sinne des erfindungsgemäßen Handelns sehr gut geeignet. Stark saure Mineralsäuren, beispielsweise Salzsäure, stören ebenfalls die Fähigkeit zur Polymerisationsauslösung durch die erfindungsgemäß verwendeten Aktivatorsysteme. Essigsäure bzw. zur Essigsäure hydrolysierbare Derivate - pKₛ-Wert der Essigsäure etwa 4,76 - eignet sich hervorragend zur beschleunigten Reaktionsauslösung.

Die Obergrenze des pK_{S}-Wertes kann im Bereich sehr schwach saurer Verbindungen - als freie Carbonsäure bestimmt - gesehen werden. Zahlenmäßig liegt damit die Obergrenze bei pK_{S}-Werten von etwa 13, bevorzugt bei etwa 11,5. Besonders geeignet sind allerdings solche Carbonsäuren, die im hydrolysierten Zustand pK_{S}-Werte bis etwa 8, vorzugsweise bis etwa 6 oder 7 aufweisen. Besonders wirkungsvolle Komponenten der hier betroffenen Art leiten sich dann von Carbonsäuren ab, die im hydrolysierten Zustand pK_{S}-Werte im Zahlenbereich von etwa 1 bis 6 oder 7 besitzen.

Die erfindungsgemäß in verkappter Form einzusetzenden Carbonsäuren können eine oder mehrere Carboxylgruppen aufweisen. Die Konstitution der Säure als solche ist - der richtige pK_{S}-Wert vorausgesetzt - nicht so sehr der entscheidende Parameter. Für die praktische Anwendbarkeit der Erfindung steht die zuverlässige Zugänglichkeit der vollverkappten Form der jeweiligen Carbonsäure im Vordergrund der Überlegungen. In der bevorzugten Ausführungsform der Erfindung wird darauf geachtet, daß im Einsatzgemisch keine freien Carboxylgruppen vorliegen, sondern sich erst während der Verarbeitung durch hydrolytische Abspaltung des verkappenden Molekülteils ausbilden. Aus präparativer Sicht kann es dementsprechend vorteilhaft sein, Carbonsäuren mit 1 bis 4 Carboxylgruppen und insbesondere mit 1 oder 2 Carboxylgruppen der hier betroffenen Komponente zugrundezulegen. Der Einsatz von verkappten Monocarbonsäuren kann besonders einfach sein, weil hier die Bedingung der Beseitigung freier Carboxylgruppen besonders einfach eingestellt werden kann. Auch die Auswahl der jeweils betroffenen Carbonsäure wird weitgehend durch entsprechende Zweckmäßigkeitsüberlegungen bestimmt. Leicht zugängliche Carbonsäuren wie niedere aliphatische Carbonsäuren oder entsprechende aromatische mono- oder polyfunktionelle Carbonsäuren sind geeignete Komponenten. Geeignete aliphatische Carbonsäuren sind die C₁₋₁₈- bevorzugt C₁₋₁₀-Monocarbonsäuren, wobei der Essigsäure wiederum besondere Bedeutung zukommen kann. Geeignete aromatische Carbonsäuren sind die Benzoesäure oder entsprechende Polycarbonsäuren beispielsweise die Trimellith- oder die Pyromellithsäure. Wie am Beispiel der Dichloressigsäure gezeigt, eignen sich auch substituierte Säuren dieser Art, sofern ihr pK_{S}-Wert den angegebenen Grenzbedingungen entspricht.

Ein wesentlicher Kern der erfindungsgemäßen Lehre ist, diese schwachen Carbonsäuren in Form ihrer hydrolyselabilen Derivate einzusetzen. Geeignet sind insbesondere entsprechende Derivate schwach saurer Carbonsäuren der allgemeinen Formel II

X - O - CO - R₄ (II)

in der R₄ einen gegebenenfalls substituierten Alkyl-, Cycloalkyl-oder Arylrest bedeutet und X einen - unter gleichzeitiger Bildung der freien Säure R₄COOH - bei höchstens schwach erhöhten Temperaturen durch Hydrolyse abspaltbaren schwach sauren, praktisch neutralen oder äußerstensfalls sehr schwach basischen Rest bedeutet. Diese Einschränkung in der Definition des Restes X stellt sicher, daß tatsächlich bei der Reaktionsauslösung die schwache Säure R₄COOH die von ihr zu übernehmende Aufgabe erfüllen kann. Geeignete hydrolyselabile Derivate der schwachen Carbonsäuren sind beispielsweise ihre Anhydride oder ihre gemischten Anhydride mit anderen schwachen Carbonsäuren, wobei insbesondere auch diese anderen schwachen Carbonsäuren die zuvor angegebenen pK_{S}-Grenzwertbedingungen erfüllen. Besonders geeignet können gemischte Anhydride bzw. Ester der erfindungsgemäß definierten schwachen Carbonsäuren mit Hydroxiverbindungen solcher Heteroatome sein, die nach der Hydrolyse zu keiner Störung des Aciditätsniveaus im erfindungsgemäßen System führen. Geeignet sind hier insbesondere die im nachfolgenden noch geschilderten gemischten Anhydride bzw. Ester mit entsprechenden Verbindungen des Bors und/oder des Siliciums.

Über die Hydrolysestabilität der eingesetzten verkappten Carbonsäureverbindung kann Einfluß auf die Geschwindigkeit des Reaktionsablaufs genommen werden. Hier eröffnen sich reaktionsbeeinflussende Möglichkeiten, die eine Anpassung des Polymerisationsablaufs an den jeweiligen Anwendungszweck ermöglichen. Lediglich beipielhaft sei das wie folgt erläutert: Eine verkappte Carbonsäureverbindung im Sinne des erfindungsgemäßen Handelns ist Essigsäureanhydrid. Die Reaktionsbeschleunigung bei der Polymerisationsauslösung durch molekularen Sauerstoff insbesondere durch Luftzutritt wird jedoch erst nach hinreichender Hydrolyse durch die freie Essigsäure bewirkt. Eine solche Hydrolyse des Anhydrids in situ im Reaktionsgemisch bei Raumtemperatur und Einwirkung von Umgebungsluft mit ihrem beschränkten Feuchtigkeitsgehalt kann ein vergleichsweise langwieriger Prozeß sein. Einerseits wird hierdurch der offene Zeitraum des Reaktivsystems verlängert, andererseits kann dadurch die Abbindung des Reaktivsystems im Einzelfall unangemessen verzögert werden. Werden statt dessen vergleichsweise hydrolyselabilere Verbindungen eingesetzt - beispielsweise solche von der im nachfolgenden beschriebenen Art - dann gelingt die Anregung des Gesamtsystems wirkungsvoll bereits in vergleichsweise kurzen Zeiträumen.

Unter Berücksichtigung dieser Überlegung kommen für die Bedeutung des Restes X aus der allgemeinen Formel II insbesondere die folgenden Bedeutungen in Betracht:
Reste der nachfolgenden allgemeinen Formel III

R₅ - CO - (III)

in der der Rest R₅ gleich oder verschieden ist von dem Rest R₄ aus der allgemeinen Formel II und dabei insbesondere Alkyl, Cycloalkyl oder Aryl bedeutet, wobei alle diese Reste auch mit der Maßgabe substituiert sein können, daß die bei der Hydrolyse entstehende freie Carbonsäure R₅COOH wenigstens der genannten unteren Grenze für den pK_{S}-Wert entspricht.

Als vergleichsweise hydrolyselabile Komponenten eignen sich gemischte Anhydride bzw. Ester mit Hydroxylgruppen enthaltenden Borverbindungen. Bevorzugt entspricht bei dieser Klasse von Verbindungen der Rest X aus der allgemeinen Formel II dem im nachfolgenden definierten Rest der allgemeinen Formel IV

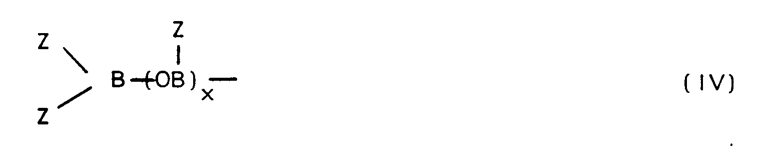

In dem Molekülteil gemäß dieser allgemeinen Formel IV können die Reste Z gleich oder verschieden sein und dabei insbesondere einen Rest R₅-CO-O und/oder Alkyl-, Cycloalkyl- und/oder Arylreste bedeuten, die ihrerseits gegebenenfalls auch substituiert und/oder auch über ein Sauerstoffatom an das Bor gebunden sein können. R₅ hat dabei die im Zusammenhang mit der allgemeinen Formel III erläuterte Bedeutung. x ist 0 oder eine ganze Zahl und hat insbesondere den Wert von 0 bis 2. Eine besonders wichtige verkappte schwache Carbonsäure für das erfindungsgemäße Arbeiten leitet sich von Verbindungen der allgemeinen Formel II ab, in denen X den Rest der allgemeinen Formel IV darstellt, wobei x die Zahl 1 bedeutet und die Reste Z die Bedeutung von R₄-CO-O haben. Ein charakteristischer Vertreter dieser Stoffklasse ist Tetraacetoxydiboroxan, das sich als besonders wirkungsvolle, leicht herstellbare und leicht stabilisierbar verkappte, gleichwohl mittels Umgebungsluft rasch hydrolysierbare Carbonsäureverbindung erwiesen hat.

Eine weitere besonders geeignete Stoffklasse dieser verkappten Carbonsäureverbindungen leitet sich von analogen Verbindungen des Siliciums im Rest X ab. Verbindungen dieses Typs entsprechen der allgemeinen Formel II, wobei hier X die Bedeutung der nachfolgenden allgemeinen Formel V hat.

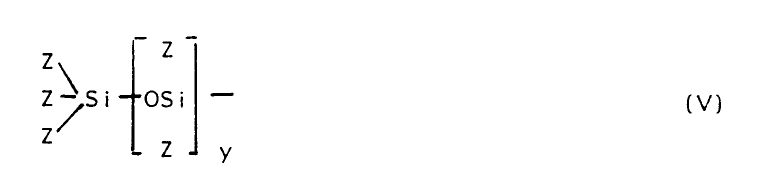

Z kann hier die gleiche Bedeutung wie zur Formel IV angegeben haben. y hat vorzugsweise einen Wert von 0 bis etwa 10 und insbesondere einen Wert von 0 bis etwa 5. Aus präparativen Gründen kann es zweckmäßig sein, daß bei Verbindungen dieses Typs ein Anteil der Reste Z durch Kohlenwasserstoffreste insbesondere durch Alkylreste und hier insbesondere durch Niedrig-Alkylreste wie Methyl gebildet wird. In einer bevorzugten Ausführungsform liegen in dem Molekülteil der allgemeinen Formel V an wenigstens einigen bevorzugt an allen Siliciumatomen jeweils zwei Alkylreste insbesondere zwei Methylreste vor. Komponenten dieser Art sind präparativ besonders einfach zugänglich, dementsprechend sind die dazugehörigen verkappten Verbindungen der allgemeinen Formel II besonders einfach zugänglich.

Als Verbindungen der allgemeinen Formel II, in denen X die Bedeutung der allgemeinen Formel IV oder V hat, können bezüglich der Indexzahlen x bzw. y bestimmte ganzzahlige Komponenten vorliegen, wie es für den Fall des Tetraacetoxydiboroxans bereits angegeben ist. Es können aber auch homologe Stoffmischungen bezüglich dieser Reste IV und insbesondere bezüglich des Restes V eingesetzt werden, so daß x und insbesondere y als Durchschnittswert keinen ganzzahligen Werten zu entsprechen haben.

Aktivatorsysteme aus den hier geschilderten drei Hauptkomponenten aromatische Aminverbindung, wenigstens anteilsweise löslicher metallischer Trockenstoff und verkappte zur Hydrolyse befähigte schwache Säure sind in der Lage, nach Aufnahme von Feuchtigkeit und Sauerstoff aus der Umgebungsluft alle die radikalisch polymerisierbaren olefinisch ungesättigten Systeme zu initiieren, die bisher mit den verschiedenartigsten insbesondere peroxidischen Startersystemen eingesetzt werden. Zur Definition der weiteren Bestandteile der erfindungsgemäß beschriebenen formgebend verarbeitbaren radikalisch polymerisierbaren Mehrstoffgemische kann insoweit auf die umfangreichen Angaben der einschlägigen Literatur Bezug genommen werden, die sich mit der Herstellung und Verarbeitung von Systemen beschäftigt, die auf Basis olefinisch ungesättigter radikalisch polymerisierbarer Verbindungen aufgebaut sind. In der Fachwelt steht heute eine außerordentlich große Zahl von Stoffsystemen dieser Art zur Verfügung, die auf den jeweiligen Einsatzzweck in ihren Eigenschaften zugeschnitten sind. Grundsätzlich kann das erfindungsgemäße Prinzip der Reaktionsauslösung durch Einwirkung von Sauerstoff, insbesondere durch einfache Einwirkung von Umgebungsluft überall dort zum Einsatz kommen, wo eine störende Interaktion mit den geschilderten Hauptkomponenten des erfindungsgemäß verwendeten Aktivatorsystems ausgeschlossen ist. Allgemeines chemisches Wissen gibt unter Berücksichtigung der zuvor geschilderten Gesetzmäßigkeiten für das erfindungsgemäße Handeln hinreichende Anweisung, inwieweit im einzelnen speziell ausgewählte Systeme verwertbar sind oder wie sie im Rahmen der Erfindung eingesetzt werden müssen, um die Bedingung des erfindungsgemäßen Handelns zu erfüllen. Am nachfolgenden Beispiel wird das ersichtlich:
Polymerisierbare Komponenten und gegebenenfalls lösliche und/oder unlösliche Füllstoffe sowie die erfindungsgemäßen Aktivatorsysteme enthaltende Stoffgemische können als unter Luftausschluß nicht-reaktives 1-Komponenten-System ausgebildet sein, sofern sichergestellt ist, daß im Stoffgemisch keine Bestandteile vorliegen, die zu unerwünschter vorzeitiger Abreaktion wenigstens einer der Hauptkomponenten des erfindungsgemäßen Systems führen. So ist es für die Ausbildung von 1-Komponenten-Systemen insbesondere wichtig, daß die Gesamtsysteme frei sind von reaktiven Gruppen, insbesondere in der Form reaktiver Wasserstoffatome, wie sie beispielsweise in Form von Hydroxyl- und/oder Carboxylgruppen vorliegen. Solche Reaktivgruppen mit aktiven Wasserstoffatomen stören immer dann, wenn sie zur vorzeitigen Freisetzung der maskierten schwach sauren Carbonsäuren führen.

Die Gegenwart solcher reaktiven Gruppen macht allerdings das Arbeiten mit den erfindungsgemäßen Startersystemen keineswegs unmöglich. Hier ergibt sich beispielsweise die Möglichkeit des Arbeitens im Mehrkomponentensystem. Sollen beispielsweise im Gesamtsystem Mischungskomponenten mitverwendet werden, die aktive Wasserstoffatome - z. B. in Form freier Carboxyl-und/oder Hydroxylgruppen - enthalten, so wird in dieser Ausführungsform das erfindungsgemäß einzusetzende Mehrstoffgemisch als Mehrkomponentensystem vorgesehen. Hierbei ist darauf zu achten, daß die Mischungsbestandteile mit reaktiven Wasserstoffatomen im Mehrkomponentensystem getrennt von den maskierten schwachen Carbonsäuren des erfindungsgemäßen Aktivatorsystems gehalten sind. Zum praktischen Einsatz des Systems werden in an sich bekannter Weise die Komponenten miteinander vermischt. Die offene Topfzeit des Systems kann durch geeignete Auswahl und Anpassung der Hauptkomponenten des Aktivatorsystems geregelt werden, so daß also auch hier die Auslösung der Startreaktion und damit letztlich die Aushärtung des Systems unter Umgebungsbedingungen an der Luft möglich ist. Diese hier lediglich beispielhaft gegebene Erläuterung für das Arbeiten mit Mischungsbestandteilen mit Gehalten an reaktiven Wasserstoffatomen gelten sinngemäß für andere Reaktivbestandteile. Solange die Funktionsfähigkeit des Aktivatorsystems auch nach Zusammenmischung aller Bestandteile des Mehrstoffgemisches besteht, ist seine Verwendbarkeit unter den angegebenen Bedingungen gewährleistet.

Eine andere Möglichkeit, potentiell reaktive und damit störende Gruppen dem Reaktionsgeschehen zu entziehen, liegt in der Möglichkeit der Maskierung auch solcher Gruppen. Verständlich wird dieses Arbeitsprinzip - das eine weitere bevorzugte Ausführungsform der Erfindung betrifft - am Beispiel unerwünschter freier Carboxylgruppen. Durch eine temporäre Verkappung mit beispielsweise hydrolyseinstabilen Gruppen kann sichergestellt werden, daß während eines Zeitraumes der Lagerung unter Feuchtigkeitsausschluß keine unerwünschten Sekundärreaktionen ausgelöst werden. Gleichwohl kann zu einem späteren Zeitpunkt durch Feuchtigkeitseinfluß - der im Rahmen der Reaktionsauslösung ohnehin gefordert wird - die Verkappung solcher freien Carboxylgruppen wieder beseitigt werden. Es ist dabei möglich, über das Ausmaß der Hydrolyseinstabilität die Beständigkeit der verkappten Form zu regulieren. Im einzelnen gelten hier die allgemeinen chemischen Gesetzmäßigkeiten.

Dieses Prinzip der hydrolyseinstabilen Verkappung freier Carboxylgruppen kann insbesondere auch in der folgenden Kombination Verwendung finden: Wichtige olefinisch ungesättigte und radikalisch polymerisierbare Säuren von der Art der (Meth)acrylsäure(n), Crotonsäure, Maleinsäure und dergleichen können in derartig verkappter Form dem Reaktionsgemisch und damit der Reaktion zugegeben werden. Ist die Verkappung dieser Säurekomponenten hydrolysestabiler als die der zur Reaktionsauslösung beigegebenen verkappten Carbonsäurekomponente des erfindungsgemäß verwendeten Aktivatorsystems, so werden die ungesättigten Carbonsäuren zunächst in verkappter Form in den Polymerisationsvorgang einbezogen. Die hydrolytische Abspaltung der Verkappung ist zu einem späteren Zeitpunkt möglich. Es leuchtet ein, daß es in den Rahmen der Erfindung aber auch fällt, solche ungesättigten Carbonsäuren in verkappter jedoch hydrolyselabiler Form wenigstens anteilsweise als schwach saure Katalysatorkomponente einzusetzen. Hier kommt dann beispielsweise der Acrylsäure oder der Methacrylsäure im Reaktionsgemisch bei Reaktionsauslösung eine doppelte Funktion zu. Nach hinreichender hydrolytischer Abspaltung der Verkappung wirkt die gebildete freie Säure im Zusammenwirken mit den anderen Komponenten der erfindungsgemäßen Aktivatorsysteme reaktionsauslösend, gleichzeitig wird diese Komponente aber in den Polymerisationsvorgang einbezogen und in das entstehende Polymermolekül eingebunden.

In einer besonderen Ausführungsform umfaßt die Erfindung Mehrkomponentensysteme, die auch bei Luftzutritt nicht-reaktiv sind und erst nach Vermischung aller Komponenten die erfindungsgemäß gewünschte Startreaktion auslösen. Hierbei kann es sich insbesondere um die Aufteilung des Aktivatorsystems in ein 2-Komponentensystem handeln. In der bevorzugten Ausführungsform wird dabei die tert. N-Verbindung getrennt von den Metallverbindungen und den zu freien Carbonsäuren hydrolysierbaren Verbindungen gehalten. Beide Komponenten des Gesamtsystems können allerdings substantielle Anteile der zu polymerisierenden Verbindungen und/oder der sonstigen mitverwendeten Füll- und Hilfsstoffe enthalten. Möglich ist hier insbesondere eine solche Verteilung der Hauptstoffmengen des Mehrstoffgemisches auf die zwei Komponenten, daß beide Einzelkomponenten substantielle Anteile der Gesamtmischung ausmachen. Auf diese Weise können Dosierungschwierigketen bei der Bemessung und der Vermischung zum gebrauchsfertigen Gemisch vermieden werden, wie sie beispielsweise auftreten können, wenn eine getrennt gehaltene Mischungskomponente in nur sehr kleiner Menge in einer sehr großen Menge einer zweiten Komponente rasch und zuverlässig verteilt werden soll.

In der bevorzugten Ausführungsform sind die Mehrstoffgemische der Erfindung, die sowohl das erfindungsgemäße Aktivatorsystem als die zu polymerisierenden Komponenten in Abmischung mit ihren Füll- und/oder Hilfsstoffen enthalten, als fließfähiges jedoch wenigstens schwach angedicktes bis pastös verteilbares Mehrstoffgemisch ausgebildet. Die jeweilige bestimmte Beschaffenheit wird dem Anwendungszweck angepaßt. Klebstoffe bzw. Füll- oder Dichtungsmassen werden im allgemeinen pastöser eingestellt sein als streich- bzw. spritzfähige Lacke. In einer bevorzugten Ausführungsform sind die Systeme frei von Lösungsmitteln. Ihre Fließfähigkeit wird in der Regel durch ethylenisch ungesättigte Monomere eingestellt bzw. geregelt. Die in der radikalisch ausgelösten Polymerisationstechnik weitaus überwiegend eingesetzten Monomertypen basieren heute auf dem Typ von Acrylat- und/oder Methacrylatverbindungen, Styrol bzw. substituierten Styrolen und/oder Acrylnitril. Die erfindungsgemäßen Aktivatorsysteme sind wirkungsvolle Starter für diese Monomertypen insbesondere in den heute in der Praxis üblichen Systemen und können insbesondere als bei Raumtemperatur oder lediglich schwach erhöhten Temperaturen unter Einwirkung von Umgebungsluft reaktive Starter ausgebildet sein. Dabei ist die Polymerisationsauslösung in der ganzen Breite der heute bekannten Acrylat- bzw. Methacrylatsysteme, der styrolmodifizierten Stoffgemische, insbesondere der Systeme auf Basis ungesättigter Polyesterharze/Styrol, anwendbar.

Es hat sich gezeigt, daß die rasche und wirkungsvolle Polymerisationsauslösung zum System-immanenten vorbestimmten Zeitpunkt insbesondere dann möglich ist, wenn die zur Applikation eingesetzten Systeme wenigstens leicht erhöhte Viskositätswerte aufweisen. So kann insbesondere die Polymerisationsauslösung im reinen ungesättigten in üblicher Weise stabilisierten Monomeren, beispielsweise in handelsüblichem reinem (Meth)acrylat, Styrol und dergleichen, Schwierigkeiten bereiten. Sind jedoch diese Komponenten auch nur geringfügig angedickt, dann gelingt die Polymerisationsauslösung durch Zutritt von Umgebungsluft ohne Schwierigkeiten. Bevorzugt beträgt die Mindestviskosität der im Sinne der Erfindung auszuhärtenden Systeme im Applikationszustand wenigstens etwa 30 bis 100 mPas (Brookfield). Es kann zweckmäßig sein, mit leicht höheren Viskositäten im Originalzustand der Verarbeitung zu arbeiten, so daß bevorzugte Grenzwerte bei etwa 200 mPas und insbesondere bei etwa wenigstens 300 mPas liegen. Für die Praxis haben besonders häufig Materialien besondere Bedeutung, deren Viskositätswerte im Bereich von wenigstens etwa 500 liegen, das gilt nicht nur für Klebstoffe und Dichtungsmassen mit Viskositätswerten oberhalb etwa 3000 mPas, insbesondere im Bereich bis etwa 10000 mPas, sondern auch für Stoffgemische für die Oberflächenbeschichtung im Sinne von insbesondere lösungsmittelfreien Lacksystemen. Eine Regelung der Mindestviskositätswerte erübrigt sich in den für die Praxis relevanten Fällen im allgemeinen. Nur in Sonderfällen der hochbeweglichen Flüssigphasen, wie sie beispielsweise durch die genannten ungesättigten Monomeren gebildet werden, sind entsprechende Hilfsmaßnahmen zur leichten Andickung des Systems zu berücksichtigen.

Die Möglichkeit, unter Ausschluß von Luftzutritt nicht-reaktive 1-komponentige Systeme auszubilden, die unter Luftzutritt zeitgesteuert reagieren, führt zu einer beträchtlichen Erweiterung der technischen Möglichkeiten. Anhand eines Beispiels sei das erläutert: Gebrauchsfertige 1-Komponentenklebstoffe auf beispielsweise Methacrylatbasis, die durch einfache Lufteinwirkung unter Polymerisationsauslösung aushärten, sind nicht bekannt. Das einzige Klebstoffsystem, das dieser Wunschvorstellung entsprechend für die Praxis ausgebildet worden ist, sind die Cyanacrylatklebstoffe, die sich allerdings durch beträchtliche praktische Schwierigkeiten auszeichnen. Die Härtungsreaktion dieser Cyanacrylate verläuft unter Feuchtigkeitseinfluß nach einem anionischen Mechanismus, die Lagerstabilität solcher 1-komponentigen Materialien ist immer stark gefährdet. Die Leistungsfähigkeit der Cyanacrylate als Klebstoff ist auf Grund ihrer beschränkten physikalischen Eigenschaften entsprechend eingeschränkt.

Die Erfindung erlaubt demgegenüber die Zusammenstellung optimierter Klebstoffgemische auf Acrlyat- und/oder Methacrylatbasis in Form eines nicht-reaktiven 1-komponentigen Stoffgemisches, das durch Auftrag auf die zu verklebenden Flächen und die hier stattfindende Einwirkung der Umgebungsluft aktiviert und damit klebfähig wird und anschließend aushärtet. Unter Wahrung der erfindungsgemäßen Gesetzmäßigkeiten - insbesondere inertes Verhalten gegenüber den Hauptkomponenten des Aktivatorsystems - können lösliche und/oder unlösliche Füllstoffe, Elastifizierungsmittel, Verdickungsmittel, Thixotropierungsmittel, Pigmente, Haftvermittler, Stabilisatoren und dergleichen mitverwendet werden, ohne daß die Funktionsfähigkeit des erfindungsgemäßen Aktivatorsystems gefährdet ist.

Eine Besonderheit der erfindungsgemäßen Mehrstoffgemische bzw. der erfindungsgemäß in diesen Mehrstoffgemischen eingesetzten Aktivatorsysteme liegt darin, daß eine doppelte Inhibierung und damit doppelte Steuerung des Gesamtsystems möglich wird. Durch Mitverwendung von Trocknungsmitteln im Mehrstoffgemisch gelingt eine Stabilisierung gegen unerwünschten Feuchtigkeitszutritt. Die Trocknungsmittel werden dabei bevorzugt in vorbestimmten Mengen und in aktiver Form in homogener Verteilung in das Mehrstoffgemisch eingearbeitet. Aus ihrer Menge und Kapazität leitet sich der Zeitraum ab, von dem an eindiffundierende Feuchtigkeit nicht mehr vom Trocknungsmittel gebunden wird, sondern zur hydrolytischen Spaltung der verkappten schwachen Carbonsäure unter deren Freisetzung führt. Andererseits führt die Mitverwendung üblicher ausgewählter Reduktionsmittel zur Stabilisierung gegen unerwünschten Sauerstoffzutritt. Auch hier kann durch die jeweils eingesetzte Menge des Reduktionsmittels Einfluß auf den Zeitpunkt genommen werden, von dem ab die Sauerstoffaktivierung des Systems unter Hydroperoxidbildung stattfindet. Es leuchtet ein, daß durch diese doppelte Steuerungsmöglichkeit im Einzelfall beträchtliche Freiheit zur Beeinflussung des Reaktionsablaufs gewonnen wird. So kann es beispielsweise wünschenswert sein, eine möglichst durchgängige Sättigung eines aufgetragenen Lack- oder Klebstoffilmes mit Sauerstoff zu erreichen, ohne daß eine vorzeitige Barrierenbildung durch frühzeitige Polymerisationsauslösung an der Oberfläche des Reaktivmaterials eintritt. Es kann in diesem Fall wünschenswert sein, die Verzögerung der Startreaktion durch verzögerte Hydrolyse der verkappten Säure unter Mitverwendung einer größeren Menge des Trocknungsmittels zu bewirken. Umgekehrt ist es aber auch möglich, die Konzentration an freier Säure im exponierten Materialfilm dadurch zu erhöhen, daß zunächst die Oxidationsreaktion über eine mitverwendete vergleichsweise größere Menge an Reduktionsmittel inhibiert wird, so daß unmittelbar beim Anspringen der Oxidationsreaktion eine größere Mengen an freier Säure für den Reaktionsablauf zur Verfügung steht.

Zur Inhibierung des erfindungsgemäß eingesetzten "Autox"-Systems stehen dabei die verschiedenartigsten Mechanismen zur Verfügung, von denen im folgenden die fünf Grundtypen 1 bis 5 aufgezählt seien:
1. Stabilisierung gegen O₂, Zusatz von Antioxidantien
2. Stabilisierung gegen H₂O, Zusatz von Trockenmittel
3. Stabilisierung gegen R-OOH, Zusatz von Reduktionsmittel
4. Stabilisierung gegen Radikale, Zusatz von Radikalinhibitoren
5. Stabilisierung gegen vorzeitige Säurebildung (H⁺), Zusatz von Basen

Aus dem allgemeinen chemischen Wissen seien im nachfolgenden typische Stabilisatorkomponenten aufgezählt, wobei jeweils in Klammern hinter der speziellen Verbindung angegeben ist, welchen der zuvor aufgelisteten fünf Mechanismen der Stabilisator zuzuordnen ist:

Pyrogallol (1), O₂-inhibierte Acrylate (1), Hydrochinon (1, 4), Hydrochinon-Monomethylether (1, 4), weitgehend entwässerte Zeolithe insbesondere wasserverarmter Zeolith A (2), Kristallwasser bindende Metallsalze z. B. wasserfreies Kupfersulfat (2), Triphenylphosphin (3), Tributylphosphit (3), Butylhydroxytoluol (4), Phenothiazin (4), wasserfreie basische Oxidverbindungen wie Al₂O₃ basisch und/oder CaO (5), Dicyclohexylcarbodiimid (2).

In den Mehrstoffgemischen der Erfindung machen die Aktivatorgemische bevorzugt nicht mehr als etwa 25 Gew.-% und insbesondere nicht mehr als etwa 10 Gew.-% - jeweils bezogen auf das Gewicht des Gesamtsystems - aus. Je nach Aktivität der eingesetzten Komponenten kann dabei das Gewicht des Aktivatorgemisches sehr stark abgesenkt werden und beispielsweise bis in den Bereich von etwa 0,1 Gew.-% oder wenigstens etwa 0,5 Gew.-% verringert werden. Besonders geeignet können Mengen des Aktivatorsystems von wenigstens etwa 1 Gew.-% bevorzugt bis zu etwa 8 Gew.-% und besonders von etwa 1 bis 7 Gew.-% sein. Alle diese Angaben beziehen sich dabei einerseits auf das Gesamtgewicht des erfindungsgemäßen Mehrstoffsystems und das Gesamtgewicht der drei Hauptkomponenten des Aktivatorsystems.

Die drei Hauptkomponenten des Aktivatorsystems können dabei vorzugsweise in den folgenden Mengenverhältnissen zueinander eingesetzt werden - hier Gew.-% bezogen auf das Gemisch der drei Aktivatorbestandteile:
5 bis 20 %, vorzugsweise 5 bis 15 % der Metallverbindung
30 bis 60 %, vorzugsweise 40 bis 55 % der tertiären Aminverbindung
30 bis 60 %, vorzugsweise 40 bis 55 % der verkappten schwachen Säure.

Die jeweils einzusetzenden Mengen der Metallverbindungen lassen sich insbesondere auch über das Gewichtsverhältnis von Metallgewicht zu Gewicht des mehrkomponentigen Aktivatorsystems wie folgt definieren:
Bevorzugte Metallmengen liegen innerhalb des Bereiches von 0,01 bis 5 Gew.-%, besonders 0,05 bis 2 Gew.-% und insbesondere innerhalb des Bereiches von etwa 0,1 bis 1 Gew.-% Metall, jeweils bezogen auf das Gesamtgewicht der Aktivatorbestandteile.

Werden zur Steuerung des Reaktionsablaufs und/oder der offenen Topfzeit Inhibitoren und/oder Stabilisatoren der zuvor angegebenen Art mitverwendet, so bemißt sich ihre Menge nach dem angegebenen Zweck. Sie kann im Einzelfall durch fachgerechte Überlegungen und/oder durch Vorversuche einfach ermittelt werden. Auch dieses sei lediglich beispielhaft wieder an einem Vergleich erläutert: Wird zur primären Bindung von eindiffundierender Feuchtigkeit ein Kristallwasser bildendes Metallsalz, etwa Kupfersulfat, eingesetzt, dann sind davon rein gewichtsmäßig gesehen, größere Mengen erforderlich als bei einer entsprechenden Inhibierung eindiffundierenden Sauerstoffs durch mitverwendetes Triphenylphosphin. Die mitverwendeten Regulatoren werden üblicherweise wenige Prozent - z. B. etwa 2 bis 5 Gew.% - des Gesamtgemisches nicht überschreiten und liegen im allgemeinen unterhalb 1 Gew.-%.

Gegenstand der Erfindung sind in einer weiteren Ausführungsform die eingangs ausführlich geschilderten Aktivatorsysteme aus den drei Komponenten tertiäre Aminverbindung, wenigstens anteilsweise lösliche Metallkomponente und maskierte, durch Hydrolyse spaltbare Verbindung der schwachen Säure mit pK_{S}-Werten der freien Säure nicht kleiner als etwa 0,9. Alle Zahlen- und Sachangaben zur Definition dieser Komponenten gelten auch in dieser Ausführungsform der Erfindung sinngemäß.

Die Erfindung betrifft weiterhin die Verwendung dieser Aktivatorsysteme zur Reaktionsauslösung mittels Einwirkung von Sauerstoff und Wasser insbesondere durch Einwirkung von Umgebungsluft, bevorzugt bei Raumtemperatur oder nur schwach erhöhten Temperaturen an ethylenisch ungestättigte Komponenten enthaltenden radikalisch polymerisierbaren Systemen. Betroffen ist in dieser Ausführungsform der Erfindung insbesondere die Anwendung der Aktivatorsysteme in Acrylat- und/oder Methacrylatbasierten polymerisierbaren Stoffen bzw. Stoffgemischen bzw. vergleichbaren Systemen auf Basis von Styrol und/oder Acrylnitril enthaltenden Kompositionen etwa von der Art der Styrol/ungesättigten Polyesterharz-Gemische.

In einer besonders wichtigen Ausführungsform betrifft die Erfindung aerob härtende Klebstoffsysteme, die insbesondere in Form eines lagerstabil verpackten 1-Komponenten-Klebstoffs vorliegen können und durch die Verwendung der erfindungsgemäßen Aktivatorgemische gekennzeichnet sind. Weitere Ausführungsformen der Erfindung betreffen die Verwendung dieser Aktivatorsysteme im Rahmen der Oberflächenbeschichtung mit polymerisierbaren insbesondere streichfähigen Beschichtungsmaterialien. Die Erfindung stellt in dieser Ausführungsform in einer bevorzugten Ausführungsform streichfähige lufttrocknende Lacksysteme zur Verfügung, die bevorzugt lösungsmittelfrei sind. Eine weitere Ausführungsform der Erfindung betrifft schließlich die Verwendung geeigneter Systeme, beispielsweise der erwähnten Styrol/ungesättigte Polyesterharz-Systeme zur Herstellung von Formteilen unter Reaktionsauslösung durch Einwirkung von Umgebungsluft.

Systeme der zuvor geschilderten Art enthalten häufig Kombinationen von niedermolekularen, ethylenisch ungesättigten Monomeren und vorgebildeten Oligomeren und/oder Polymeren, die mit den eingesetzten Monomeren verträglich und insbesondere in ihnen wenigstens anteilsweise löslich sind. Der Gehalt solcher Mehrstoffgemische an radikalisch polymerisierbaren Komponenten, insbesondere ihr Monomergehalt beträgt wenigstens etwa 20 Gew.-% und bevorzugt wenigstens etwa 40 Gew.-%. Monomergehalte können - unter Berücksichtigung der Grenzbedingung zur wenigstens schwach erhöhten Viskosität - obere Grenze von 60, 80 oder auch 90 Gew.-% erreichen. Im einzelnen gilt hier das allgemeine Wissen des Fachmanns. Dem Mehrstoffgemisch zugesetzte oligomere oder polymere Komponenten können ihrerseits reaktive Gruppen, insbesondere ethylenisch ungesättigte Gruppen enthalten oder auch davon frei sein. Bekannt ist schließlich aber auch, daß auf die Mitverwendung von niedermolekularen Monomerverbindungen praktisch ganz verzichtet werden kann, wenn die Handhabbarkeit und insbesondere die formgebende Verarbeitbarkeit eines Stoffgemisches sichergestellt ist, das ausschließlich aus vorgebildeten Oligomer- und/oder Polymerverbindungen besteht, die wenigstens anteilsweise der radikalisch ausgelösten Polymerisations- bzw. Vernetzungsreaktion zugänglich sind.

### Beispiele

### Beispiel 1

Eine Mischung aus
44,5 % MMA
45 % Polyester-Polyurethan, bestehend aus
2 Mol CAPA 200 (Poly-Caprolacton der Fa. UCC, OHZ 209)
3 Mol 2,4-Toluylendiisocyanat (Desmodur T 100, Fa. Bayer)
1 Mol B-01/20 (Polypropylenglykolmonobutylether der Fa. Hoechst, OHZ 75)
1 Mol Hydroxyethylmethacrylat
5 % Tetraacetoxydiboroxan
5 % N,N-Dimethyl-p-toluidin
0,5 % Kobaltnaphthenat mit einem Kobaltgehalt von 6 %
härtet in einer Schichtdicke von etwa 1 bis 2 mm an der Luft innerhalb von 60 Minuten aus. Durch Herabsetzung der Schichtdicke auf übliche Filmstärke für eine Verklebung sinkt die Zeitdauer der Aushärtung auf 20 Minuten.

### Beispiel 2

Die Klebstoffmischung besteht aus
49,5 Gew.-% MMA
40 Gew.-% löslicher Füllstoff (Plexigum MB 319, Fa. Röhm)
5 Gew.-% Tetraacetoxydiboroxan
5 Gew.-% N,N-Dimethyl-p-toluidin
0,5 Gew.-% Kobaltnaphthenat

Die Mehrkomponentenmischung wird aus wasserfreien Komponenten hergestellt und nach Entgasen in einer Inertgasatmosphäre gelagert.

Für die Verklebung wird die Klebstoffmischung auf die zu verklebenden Oberflächen aufgebracht und für 3 bis 5 Minuten der Umgebungsluft ausgesetzt. Nach Beginn der Reaktion - feststellbar durch eine Eintrübung und beginnende Hautbildung - werden die Fügeteile verklebt und fixiert.

Nach einer Lagerung von 24 Stunden bei Raumtemperatur ergibt sich für Verklebungen von PVC-Platten bei Zugscherfestigkeitsprüfungen Materialbruch.

### Beispiele 3 bis 8

Gemische aus
65 % MMA
28 % Plexigum MB 319
3,5 % N,N-Dimethyl-p-toluidin
3,5 % Carbonsäurederivat
0,03 % Co(II)-acetylacetonat und gegebenenfalls
0 - 1000 ppm Inhibitor
härten bei Kontakt mit der Umgebungsluft aus. Für Verklebungen werden die zu verklebenden Teile dünn eingestrichen und nach 3 bis 5 Minuten (Hautbildung) gefügt und gegebenenfalls fixiert. Zugscherfestigkeiten wurden nach 24 Stunden bestimmt.

| Beispiel Nr. | Carbonsäurederivat | Topfzeit (min) | Zugscherfestigkeit (PVC) (N/mm²) |
|---|---|---|---|
| 3 | Tetraacetoxydiboroxan | 60 | 7,9 (MB) |
| 4 | Tetraacetoxydiboroxan Zusatz von 200 ppm Triphenylphosphin | 60 | 6,5 (MB) |
| 5 | Essigsäuretrimethylsilylester | 150 | 3,0 (MB) |
| 6 | Propionsäuretrimethylsilylester | 180 | 1 |
| 7 | Tetraacetoxysilan | 15 | 10,5 (MB) |
| 8 | Methacrylsäuretrimethylsilylester | 64 | 1,5 |
| MB = Materialbruch | | | |

### Beispiel 9

Ein Gemisch aus
62 % Tetrahydrofurfurylmethacrylat
31 % Plexigum MB 319
0,03 % Co-acetylacetonat
3,5 % N,N-Dimethyl-p-toluidin
3,5 % Tetraacetoxydiboroxan
hat bei Kontakt mit der Umgebungsluft eine Topfzeit von 60 Minuten.

Gemäß Beispielen 4 bis 9 ausgeführte Verklebungen führten zu Zugscherfestigkeiten von 7,5 N/mm² auf PVC und 7,6 N/mm² auf Eisen.

### Beispiel 10

Ein Gemisch aus
63 % MMA
27 % Plexigum MB 319
3 % Mn(II)-octoat
3,5 % N,N-Dimethyl-p-toluidin
3,5 % Tetraacetoxydiboroxan
polymerisiert 15 Minuten nach Kontakt mit der Atmosphäre.

### Beispiel 11

Das Handelsprodukt "Diacryl 101" (Di-Methacrylat von Bisphenol A x 2 EO) wird ohne Mitverwendung weiterer reaktiver Monomerkomponenten in einer Menge von 89,5 Gew.-% mit einem Aktivatorsystem aus 5 Gew.-% Dimethyl-p-toluidin, 5 Gew.-% Tetraacetoxydiboroxan und 0,5 Gew.-% Kobalt-naphthenatlösung versetzt.

Nach der Exposition dieses Stoffgemisches an der Luft ist das Material innerhalb 1 Stunde polymerisiert (Oberflächenklebrigkeit) und härtet innerhalb eines Tages aus.

Ein analoges Verhalten zeigt sich beim Einsatz von Cyclohexylmethacrylat.

## Patentansprüche

1. Formgebend verarbeitbare radikalisch polymerisierbare Mehrstoffgemische enthaltend
ethylenisch ungesättigte polymerisierbare Verbindungen gewünschtenfalls in Abmischung mit löslichen und/oder unlöslichen Füll- und/oder sonstigen Hilfsstoffen sowie
ein durch Sauerstoffzutritt initiierbares Aktivatorsystem,
dadurch gekennzeichnet, daß sie ein durch Zutritt von Sauerstoff und Wasser, insbesondere durch Einwirkung von Umgebungsluft initiierbares Aktivatorsystem auf Basis der nachfolgenden Hauptkomponenten enthalten:
N-Alkyl-substituierte tert.-Arylamine mit wenigstens einer alpha-ständigen aliphatischen CH-Bindung
im System wenigstens anteilsweise lösliche Metallverbindungen für die Trocknungsbeschleunigung ungesättigter Öle sowie
bei Feuchtigkeitszutritt zur freien Carbonsäure hydrolisierbare Verbindungen schwach saurer Carbonsäuren mit pK_{S}-Werten nicht kleiner als etwa 0,9.

2. Mehrstoffgemische nach Anspruch 1, dadurch gekennzeichnet, daß sie als unter Luftausschluß nicht-reaktives 1-Komponenten-System oder als auch bei Luftzutritt nicht-reaktives Mehrkomponentensystem ausgebildet sind, wobei als Mehrkomponentensysteme insbesondere 2-Komponenten-Systeme vorliegen, in denen die tert. N-Verbindung getrennt von den Metallverbindungen und den zu freien Carbonsäuren hydrolysierbaren Verbindungen gehalten ist.

3. Mehrstoffgemische nach Ansprüchen 1 und 2, dadurch gekennzeichnet, daß sie besonders bei ihrer Ausbildung als nicht-reaktives 1-Komponenten-System frei sind von reaktiven Gruppen, insbesondere reaktiven Wasserstoffatomen, beispielsweise in Form von OH- und/oder -COOH-Gruppen, die zur vorzeitigen Freisetzung der schwach sauren Carbonsäuren führen.

4. Mehrstoffgemische nach Ansprüchen 1 bis 3, dadurch gekennzeichnet, daß sie als bei Umgebungstemperatur oder nur mäßig erhöhten Temperaturen durch Zutritt von Umgebungsluft aktivierbares System ausgebildet sind.

5. Mehrstoffgemische nach Ansprüchen 1 bis 4, dadurch gekennzeichnet, daß sie als fließfähiges, bevorzugt als wenigstens schwach angedickt streichfähiges bis pastös verteilbares Material ausgebildet sind.

6. Mehrstoffgemische nach Ansprüchen 1 bis 5, dadurch gekennzeichnet, daß sie als N-Alkyl-substituierte Arylamine Verbindungen der allgemeinen Formel I 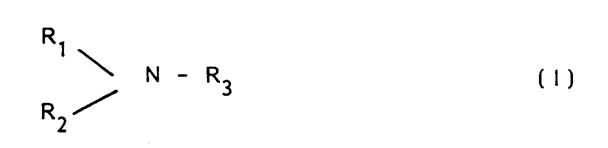 enthalten, in der
R₁ einen gegebenenfalls substituierten Arylrest, insbesondere einen gegebenenfalls alkylsubstituierten Phenylrest bedeutet,
R₂ die Bedeutung von R₁ hat oder einen gegebenenfalls substituierten geradkettigen oder verzweigten Alkylrest und
R₃ einen geradkettigen oder verzweigten Alkylrest bedeutet, der auch substituiert sein kann, dabei jedoch in Alpha- Stellung zum N wenigstens ein H-Atom aufweist.

7. Mehrstoffgemische nach Ansprüchen 1 bis 6, dadurch gekennzeichnet, daß als Verbindungen der allgemeinen Formel I im aromatischen Ring substituierte oder unsubstituierte Dialkylanilinverbindungen vorliegen, deren Alkylreste jeweils bevorzugt bis zu 10, insbesondere bis zu 6 C-Atome aufweisen, wobei gegebenenfalls Ring-alkylsubstituierte Anilinderivate, insbesondere solche von der Struktur des Dimethylanilins und/oder des Dimethyl-p-Toluidins besonders geeignet sind.

8. Mehrstoffgemische nach Ansprüchen 1 bis 7, dadurch gekennzeichnet, daß sie als im System wenigstens anteilsweise lösliche, metallhaltige Trockenstoffe Verbindungen von Metallen enthalten, die in mehreren Wertigkeitsstufen auftreten, insbesondere Verbindungen entsprechender Übergangsmetalle, wobei bevorzugt die Metallionen jeweils in ihrer niedrigen Wertigkeitsstufe vorliegen.

9. Mehrstoffgemische nach Ansprüchen 1 bis 8, dadurch gekennzeichnet, daß sie in organischen Medien lösliche Metallverbindungen des Kobalts und/oder des Mangans oder auch des Eisens enthalten, wobei das Eisen auch als Fe³⁺-Verbindung eingesetzt werden kann.

10. Mehrstoffgemische nach Ansprüchen 1 bis 9, dadurch gekennzeichnet, daß sie bei Feuchtigkeitszutritt hydrolisierbare Verbindungen von Carbonsäuren mit pK_{S}-Werten nicht kleiner als etwa 1, vorzugsweise nicht kleiner als etwa 1,3 enthalten.

11. Mehrstoffgemische nach Ansprüchen 1 bis 10, dadurch gekennzeichnet, daß sie verkappte, bei Feuchtigkeitszutritt hydrolysierbare Verbindungen einer Obergrenze des pK_{S}-Wertes von etwa 13, bevorzugt von etwa 11,5 und insbesondere entsprechende Carbonsäureverbindungen mit einer Obergrenze des pK_{S}-Wertes der freien Carbonsäure von etwa 7 enthalten.

12. Mehrstoffgemische nach Ansprüchen 1 bis 11, dadurch gekennzeichnet, daß sie verkappte Carbonsäuren mit einer oder mehreren Carboxylgruppen, insbesondere mit 1 bis 4 Carboxylgruppen enthalten.

13. Mehrstoffgemische nach Ansprüchen 1 bis 12, dadurch gekennzeichnet, daß sie die schwachen Carbonsäuren in Form ihrer Anhydride und/oder als gemischte Anhydride mit anderen schwachen Carbonsäuren und/oder als gemischte Anhydride bzw. Ester mit Hydroxiverbindungen von Heteroatomen, insbesondere entsprechenden Verbindungen des Bor und/oder Silicium enthalten.

14. Mehrstoffgemische nach Ansprüchen 1 bis 13, dadurch gekennzeichnet, daß sie Hydrolyse-labile Derivate schwach saurer Carbonsäuren der allgemeinen Formel II
X - O - CO - R₄ (II)
enthalten, in der
R₄ einen gegebenenfalls substituierten Alkyl-, Cycloalkyl-oder Arylrest bedeutet und
X einen - unter gleichzeitiger Bildung der freien Säure R₄COOH - bei höchstens schwach erhöhten Temperaturen durch Hydrolyse abspaltbaren schwach sauren, praktisch neutralen oder äußerstenfalls sehr schwach basischen Rest bedeutet.

15. Mehrstoffgemische nach Ansprüchen 1 bis 14, dadurch gekennzeichnet, daß sie hydrolyselabile Derivate der allgemeinen Formel II enthalten, in der X den Rest der allgemeinen Formel IV 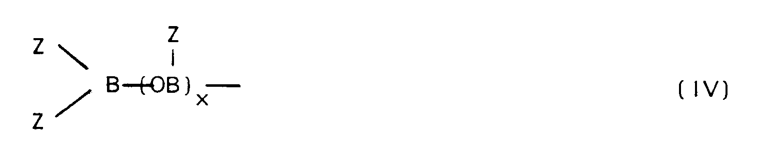 bedeutet, wobei in dieser Formel die Reste Z gleich oder verschieden sind und die folgende Bedeutung haben:
einen Rest R₅ - CO - O -, wobei R₅ gleich oder verschieden ist von dem Rest R₄ aus der allgemeinen Formel II und dabei insbesondere Alkyl, Cycloalkyl oder Aryl bedeutet, wobei diese Reste auch mit der Maßgabe substituiert sein können, daß die bei der Hydrolyse entstehende freie Carbonsäure R₅COOH wenigstens der genannten unteren Grenze für den pK_{S}-Wert entspricht
und/oder Z Alkyl-, Cycloalkyl- und/oder Arylreste bedeutet, die ihrerseits gegebenenfalls auch substituiert und/oder auch über einen Sauerstoffatom an das Bor gebunden sein können,
x eine Zahl von 0 bis 2 ist und insbesondere die Bedeutung von 1 hat.

16. Mehrstoffgemische nach Ansprüchen 1 bis 13, dadurch gekennzeichnet, daß sie Verbindungen der allgemeinen Formel II enthalten, in der X einen Rest der allgemeinen Formel V bedeutet 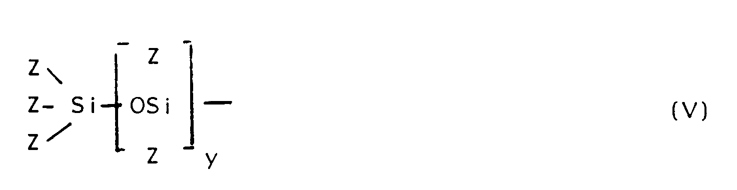 wobei Z die zu Verbindungen der allgemeinen Formel IV angegebene Bedeutung hat und y einen Wert von 0 bis etwa 10 und insbesondere einen Wert bis etwa 5 bedeutet.

17. Mehrstoffgemische nach Ansprüchen 1 bis 16, dadurch gekennzeichnet, daß sie als ethylenisch ungesättigte polymerisierbare Komponenten Acrylat- und/oder Methacrylat-Verbindungen bzw. -Systeme, Styrol bzw. Styrolderivate und/oder Acrylnitril enthalten, die auch ganz oder teilweise in Form reaktiver vorgebildeter Oligomer- und/oder Polymerverbindungen vorliegen können.

18. Mehrstoffgemische nach Ansprüchen 1 bis 17, dadurch gekennzeichnet, daß sie zusätzlich im System lösliche und/oder unlösliche Füllstoffe, Verdickungsmittel, Elastifizierungsmittel, Pigmente, Haftvermittler und Stabilisatoren enthalten.

19. Wirkstoffgemische nach Ansprüchen 1 bis 18, dadurch gekenzeichnet, daß sie zur Stabilisierung gegen unerwünschten Feuchtigkeitszutritt Trocknungsmittel in aktiver Form und/oder zur Stabilisierung gegen unerwünschten Sauerstoffzutritt Reduktionsmittel enthalten.

20. Mehrstoffgemische nach Ansprüchen 1 bis 19, dadurch gekennzeichnet, daß das Aktivatorgemisch nicht mehr als etwa 25 Gew.-% vorzugsweise nicht mehr als 10 Gew.-% des Gesamtsystems ausmacht und dabei bevorzugt wenigstens 0,1 Gew.-% und insbesondere etwa 1 bis 8 Gew.-% des Gesamtsystems beträgt.

21. Mehrstoffgemische nach Ansprüchen 1 bis 20, dadurch gekennzeichnet, daß die Komponenten des Aktivatorsystems etwa in den folgenden Mengenverhältnissen zueinander eingesetzt werden - Gew.-% bezogen auf das Gemisch der drei Aktivatorbestandteile:
5 bis 20, vorzugsweise 5 bis 15 % Metallverbindung bzw.
0,01 bis 5, vorzugsweise 0,05 bis 2 Gew.-% Metall
30 bis 60, vorzugsweise 40 bis 55 % tert. Aminverbindung
30 bis 60, vorzugsweise 40 bis 55 % der verkappten schwachen Säure.

22. Mehrstoffgemische nach Ansprüchen 1 bis 21, dadurch gekennzeichnet, daß ihr Gehalt an radikalisch polymerisierbaren Komponenten, insbesondere ihr Monomergehalt wenigstens etwa 20 Gew.-% und bevorzugt wenigstens etwa 40 Gew.-% beträgt.

23. Mehrstoffgemische nach Ansprüchen 1 bis 22, dadurch gekennzeichnet, daß sie in der Applikationsform eine Mindestviskosität von etwa 30 mPas, bevorzugt von wenigstens etwa 100 mPas und insbesondere von wenigstens etwa 300 mPas (Brookfield) aufweisen.

24. Verwendung der Mehrstoffgemische nach Ansprüchen 1 bis 23 als aerob härtendes Klebstoffsystem insbesondere in Form eines lagerstabil verpackten 1-Komponenten-Klebstoffs.

25. Verwendung der Wirkstoffgemische nach Ansprüchen 1 bis 23 zur Oberflächenbeschichtung insbesondere als streichfähiges lufttrocknendes Lacksystem oder zur Ausbildung von Kunststoff-Formteilen.

## Claims

1. Moldable, radically polymerizable multicomponent mixtures containing
- ethylenically unsaturated, polymerizable compounds, if desired in admixture with soluble and/or insoluble fillers and
- an activator system initiatable by contact with oxygen,
characterized in that these multicomponent mixtures contain an activator system based on the following principal components which can be initiated by contact with oxygen and water and, in particular, by contact with ambient air:
- N-alkyl-substituted tert.-arylamines containing at least one aliphatic CH bond in the α-position
- metal compounds at least partly soluble in the system to accelerate the drying of unsaturated oils and
- compounds of weakly acidic carboxylic acids having pKₛ values of no less than about 0.9 which can be hydrolyzed to the free carboxylic acid on contact with moisture.

2. Multicomponent mixtures as claimed in claim 1, characterized in that they are formulated as a one-component system non-reactive in the absence of air or even as a multicomponent system non-reactive on contact with air, the multicomponent systems being in particular two-component systems in which the tert. N compound is kept separate from the metal compounds and the compounds hydrolyzable to free carboxylic acids.

3. Multicomponent mixtures as claimed in claims 1 and 2, characterized in that they are free - particularly when formulated as a non-reactive none-component system - from reactive groups, particularly reactive hydrogen atoms, for example in the form of OH and/or -COOH groups which lead to premature release of the weakly acidic carboxylic acids.

4. Multicomponent mixtures as claimed in claims 1 to 3, characterized in that they are formulated as a system designed for activation on contact with ambient air at ambient temperature or only slightly elevated temperatures.

5. Multicomponent mixtures as claimed in claims 1 to 4, characterized in that they are formulated as a free-flowing and preferably slightly thickened spreadable to paste-like material.

6. Multicomponent mixtures as claimed in claims 1 to 5, characterized in that they contain as N-alkyl-substituted arylamines compounds corresponding to general formula I 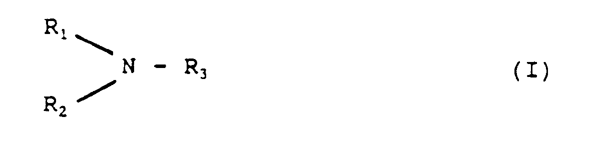 in which
R₁ is an optionally substituted aryl radical, more especially an optionally alkyl-substituted phenyl radical,
R₂ has the same meaning as R₁ or is an optionally substituted, linear or branched alkyl radical and
R₃ is a linear or branched alkyl radical which may even be substituted, but has at least H atom in the α-position to the N.

7. Multicomponent mixtures as claimed in claims 1 to 6, characterized in that dialkyl aniline compounds substituted or unsubstituted in the ring, of which the alktl radicals each preferably contain up to 10 and more preferably up to 6 C atoms, are present as compounds corresponding to general formula I, aniline derivatives optionally alkyl-substituted in the ring, especially those of the structure of dimethyl aniline and/or dimethyl-p-toluidine, being particularly suitable.

8. Multicomponent mixtures as claimed in claims 1 to 7, characterized in that they contain compounds of metals occurring in several valency stages, more especially compounds of corresponding transition metals, the metal ions preferably being present in their low valency stage, as the metal-containing driers at leastly partly soluble in the system.

9. Multicomponent mixtures as claimed in claims 1 to 8, characterized in that they contain metal compounds - soluble in organic media - of cobalt and/or manganese or even iron, the iron even being useable in the form of an Fe³⁺ compound.

10. Multicomponent mixtures as claimed in claims 1 to 9, characterized in that they contain compounds of carboxylic acids having pKₛ values no lower than about 1 and preferably no lower than about 1.3 which hydrolyze on contact with moisture.

11. Multicomponent mixtures as claimed in claims 1 to 10, characterized in that they contain masked, moisture-hydrolyzable compounds having an upper pKₛ limit of approximately 13 and preferably of approximately 11.5 and, more particularly, corresponding carboxylic acid compounds in which the free carboxylic acid has an upper pKₛ limit of about 7.

12. Multicomponent mixtures as claimed in claims 1 to 11, characterized in that they contain masked carboxylic acids containing one or more carboxyl groups and, more particularly, 1 to 4 carboxyl groups.

13. Multicomponent mixtures as claimed in claims 1 to 12, characterized in that they contain the weak carboxylic acids in the form of their anhydrides and/or as mixed anhydrides with other weak carboxylic acids and/or as mixed anhydrides or esters with hydroxy compounds of boron and/or silicon.

14. Multicomponent mixtures as claimed in claims 1 to 13, characterized in that they contain hydrolysis-labile derivatives of weakly acidic carboxylic acids corresponding to general formula II
X - O - CO - R₄ (II)
in which
R₄ is an optionally substituted alkyl, cycloalkyl or aryl radical and X is a weakly acidic, substantially neutral or, in the extreme case, very weakly basic radical which can be eliminated by hydrolysis at at most slightly elevated temperatures with simultaneous formation of the free acid R₄COOH.

15. Multicomponent mixtures as claimed in claims 1 to 14, characterized in that they contain hydrolysis-labile derivatives of general formula II in which X represents a radical corresponding to the general formula IV 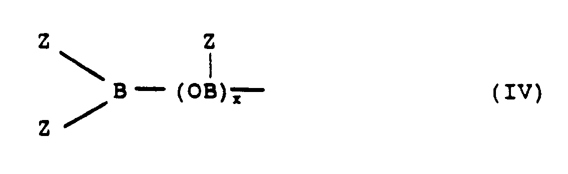 in which the Z's may be the same or different and have the following meanings:
a radical R₅-CO-O-, where R₅ is the same as or different from the radical R₄ in general formula II and, in particular, represents alkyl, cycloalkyl or aryl radicals which in turn may be substituted with the proviso that the free carboxylic acid R₅COOH formed during hydrolysis at least corresponds to the lower limit mentioned for the pKₛ value
and/or Z represents alkyl, cycloalkyl and/or aryl radicals which in turn may optionally be substituted and/or attached to the boron by an oxygen atom,
x has a value of 0 to 2, more especially 1.

16. Multicomponent mixtures as claimed in claims 1 to 13, characterized in that they contain compounds of general formula II in which X is a radical corresponding to general formula V 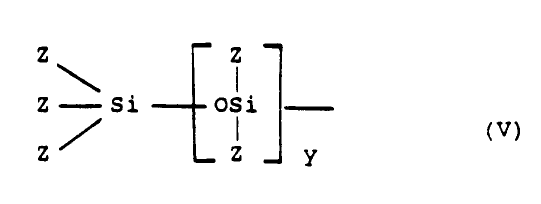 in which
Z has the meaning defined in reference to the compounds of general formula IV and y has a value of 0 to about 10 and, more particularly, a value of about 5.

17. Multicomponent mixtures as claimed in claims 1 to 16, characterized in that they contain as ethylenically unsaturated polymerizable components acrylate and/or methacrylate compounds or systems, styrene or styrene derivatives and/or acrylonitrile which may even be completely partly present in the form of reactive preformed oligomer and/or polymer compounds.

18. Multicomponent mixture as claimed in claims 1 to 12, characterized in that they additionally contain fillers, thickeners, elasticizing agents, pigments, coupling agents, stabilizers and the like which are soluble and/or insoluble in the system.

19. Active-substance mixture as claimed in claims 1 to 18, characterized in that they contain driers in active form for stabilization against unwanted contact with moisture and/or reducing agents for stabilization against unwanted contact with oxygen

20. Multicomponent mixtures as claimed in claims 1 to 19, characterized in that the activator mixture makes up no more than about 25% by weight and preferably no more than 10% by weight of the system as a whole and preferably makes up at least 0.1% by weight and, more preferably, about 1 to 8% by weight of the system as a whole.

21. Multicomponent mixtures as claimed in claims 1 to 20, characterized in that the components of the activator system are used in substantially the following quantitative ratios to one another (in % by weight, based on the mixture of the three constituents of the activator):
5 to 20 and preferably 5 to 15% by weight metal compound or
0.01 to 5 and preferably 0.05 to 2% by weight metal
30 to 60 and preferably 40 to 55% tert. amine compound
30 to 60 and preferably 40 to 55% of the masked weak acid.

22. Multicomponent mixtures as claimed in claims 1 to 21, characterized in that their content of radically polymerizable components, particularly their monomer content, is at least about 20% by weight and preferably at least about 40% by weight.

23. Multicomponent mixtures as claimed in claims 1 to 22, characterized in that, in their in-use form, they have a minimum viscosity of about 30 mPas, preferably of at least about 100 mPas and, more preferably, of at least about 300 mPas (Brookfield).

24. The use of the multicomponent mixtures as claimed in claims 1 to 23 as an aerobic adhesive system, particularly in the form of a one-component adhesive packed in storable form.

25. The use of the active-substance mixture claimed in claims 1 to 23 for the surface coating, more particularly as a spreadable, air drying paint system and for the production of plastics moldings.

## Revendications

1. Mélanges complexes polymérisables par voie radicalaire et façonnables renfermant
des composés polymérisables insaturés de façon éthylénique, éventuellement an mélange avec des charges et/ou d'autres adjuvants solubles et/ou insolubles, ainsi qu'un
système activateur amorçable par admission d'oxygène,
caractérisés en ce qu'ils renferment un système activateur amorçable par admission d'oxygène et d'eau, en particulier par l'action de l'air ambiant, à base des composants principaux ci-après:
des arylamines tertiaires N-alkylsubstituées, comportant au moins une liaison CH aliphatique en position alpha
des composés métalliques au moins partiellement solubles dans le système pour l'accélération du séchage des huiles insaturées, ainsi que,
des composés d'acides carboxyliques faiblement acides dont les valeurs pK_{A} ne sont pas inférieures à environ 0,9, qui sont hydrolysables en acide carboxylique libre en cas d'admission d'humidité.

2. Mélanges complexes selon la revendication 1, caractérisés en ce qu'ils sont formés comme système à 1 composant non réactif sous exclusion d'air, ou comme système à plusieurs composants non réactif en cas d'admission d'air, sous la forme en particulier de systèmes à 2 composants dans lesquels le composé azoté tertiaire est conservé séparément des composés métalliques et des composés hydrolysables en acides carboxyliques libres.

3. Mélanges complexes selon les revendications 1 et 2, caractérisés en ce que, en particulier en cas de formation de ceux-ci comme système à 1 composant non réactif, ils sont exempts de groupes réactifs, en particulier d'atomes d'hydrogène réactifs, par exemple sous la forme de groupes OH et/ou -COOH, qui entraînent la libération prématurée des acides carboxyliques faiblement acides.

4. Mélanges complexes selon les revendications 1 à 3, caractérisés en ce qu'ils sont formés comme système activable par admission de l'air ambiant, à la température ambiante ou à des températures seulement modérément accrues.

5. Mélanges complexes selon les revendications 1 à 4, caractérisés en ce qu'ils sont formés comme matière coulante, de préférence comme matière au moins faiblement épaissie, applicable comme enduit et pouvant même être pâteuse.

6. Mélanges complexes selon les revendications 1 à 5, caractérisés en ce qu'ils renferment comme arylamines N-alkylsubstituées, des composés de la formule générale I 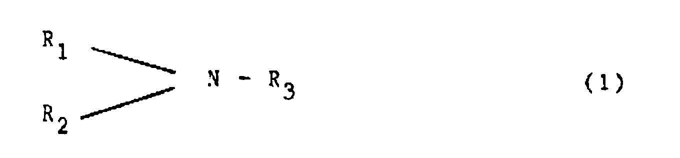 dans laquelle R₁ correspond à un radical aryle éventuellement substitué, en particulier à un radical phényle éventuellement alkylsubstitué.
R₂ possède la même valeur que R₁ ou représente un radical alkyle, à chaîne droite ou ramifiée, éventuellement substitué, et
R₃ peut être un radical alkyle à chaîne droite ou ramifiée, qui peut également être substitué, mais présente toutefois au moins un atome de H en position alpha par rapport à N.

7. Mélanges complexes selon les revendications 1 à 6, caractérisés en ce que sont présents comme composés de la formule générale I, des composés dialkylaniliniques substitués ou non substitués dans le cycle aromatique, dont les radicaux alkyle présentent dans chaque cas, de préférence jusqu'à 10, en particulier jusqu'à 6 atomes de C, des dérivés aniliniques, éventuellement alkylsubstitués dans le cycle aromatique, en particulier ceux qui possèdent la structure de la diméthylaniline et/ou de la diméthyl-p-toluidine étant particulièrement appropriés.

8. Mélanges complexes selon les revendications 1 à 7, caractérisés en ce que qu'ils renferment comme dessiccateurs métallifères au moins partiellement solubles dans le système, des composés de métaux, qui se présentent sous plusieurs degrés d'oxydation, en particulier des composés de métaux de transition correspondants, les ions métalliques étant présents de préférence dans chaque cas sous leur degré d'oxydation inférieur.

9. Mélanges complexes selon les revendications 1 à 9, caractérisés en ce qu'ils renferment des composés métalliques, solubles dans des milieux organiques, de cobalt et/ou de manganèse et également de fer, ce dernier pouvant également être mis en oeuvre comme composé Fe³⁺.

10. Mélanges complexes selon les revendications 1 à 9, caractérisés en ce qu'ils renferment des composés d'acides carboxyliques hydrolysables en cas d'admission d'humidité, dont les valeurs pK_{A} ne sont pas inférieures à environ 1, de préférence pas inférieures à environ 1,3.

11. Mélanges complexes selon les revendications 1 à 10, caractérisés en ce qu'ils renferment des composés d'acides carboxyliques dissimulés, hydrolysables en cas d'admission d'humidité, avec une limite supérieure de la valeur pK_{A} d'environ 13, de préférence d'environ 11,5 et en particulier des composés d'acides carboxyliques correspondants avec une limite supérieure de la valeur pK_{A} de l'acide carboxylique libre d'environ 7.

12. Mélanges complexes selon les revendications 1 à 11, caractérisés on ce qu'ils renferment des acides carboxyliques dissimulés comportant un ou plusieurs groupes carboxyle, en particulier avec 1 à 4 groupes carboxyle.

13. Mélanges complexes selon les revendications 1 à 12, caractérisés en ce qu'ils renferment les acides carboxyliques faibles sous la forme de leurs anhydrides et/ou comme anhydrides mixtes avec d'autres acides carboxyliques faibles et/ou comme anhydrides ou esters mixtes avec des composés hydroxylés d'hétéroatomes, en particulier de composés correspondants du bore et/ou du silicium.

14. Mélanges complexes selon les revendications 1 à 13, caractérisés en ce qu'ils renferment des dérivés d'acides carboxyliques faiblement acides, labiles par hydrolyse, de la formule générale II
X - O - CO - R₄ (II)
dans laquelle R₄ correspond à un radical alkyle, cycloalkyle ou aryle éventuellement substitué et
X représente - avec formation simultanée de l'acide libre R₄COOH - un radical faiblement acide, quasiment neutre ou, à l'extrême rigueur, très faiblement basique, dissociable par hydrolyse à des températures tout au plus légèrement accrues.

15. Mélanges complexes selon les revendications 1 à 14, caractérisés en ce qu'ils renferment des dérivés labiles par hydrolyse, de la formule générale II, dans laquelle X représente le radical de la formule générale IV 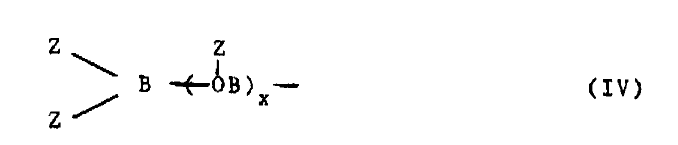 les radicaux Z de cette formule étant identiques ou différents et possédant la signification suivante:
un radical R₅ - CO - O, où R₅ est identique ou différent du radical R₄ de la formule générale II et correspond en particulier à un alkyle, à un cycloalkyle ou à un aryle, ces radicaux pouvant également être substitués dans la mesure où l'acide carboxylique libre R₅COOH formé lors de l'hydrolyse correspond au moins à la limite inférieure citée pour la valeur pK_{A},
et/ou Z représente des radicaux alkyle, cycloalkyle et/ou aryle, qui peuvent également être substitués de leur côté et/ou être liés au bore, via un atome d'oxygène,
x est un nombre de 0 à 2 et possède en particulier la valeur de 1.

16. Mélanges complexes selon les revendications 1 à 13, caractérisés en ce qu'ils renferment des composés de la formule générale II, dans laquelle X représente un radical de la formule générale V 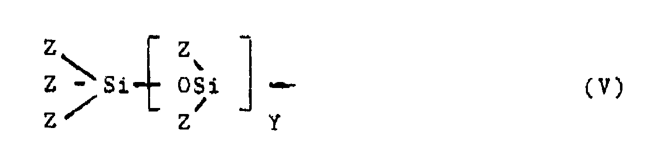 dans laquelle Z possède la valeur indiquée pour les composés de la formule générale IV, tandis que y a une valeur comprise entre 0 et environ 10 et, en particulier, une valeur jusqu'à environ 5.

17. Mélanges complexes selon les revendications 1 à 16, caractérisés en ce qu'ils renferment comme composants polymérisables, insaturés de façon éthylénique, des composés ou des systèmes d'acrylate et/ou de méthacrylate, du styrène ou des dérivés de styrène et/ou de l'acrylonitrile, qui peuvent également être présents en totalité ou en partie sous la forme de composés oligomères et/ou polymères préformés.

18. Mélanges complexes selon les revendications 1 à 17, caractérisés en ce qu'ils renferment en outre des charges, épaississants, élastifiants, pigments, agents adhésifs et stabilisants solubles et/ou insolubles dans le système.

19. Mélanges de substances actives selon les revendications 1 à 18, caractérisés en ce qu'ils renferment des produits déshydratants sous forme active pour garantir leur stabilisation contre l'accès indésirable d'humidité et/ou des agents réducteurs pour assurer leur stabilisation contre l'accès indésirable d'oxygène.

20. Mélanges complexes selon les revendications 1 à 19, caractérisés en ce que le mélange activateur ne représente pas plus d'environ 25 % en poids, de préférence pas plus de 10 % en poids de l'ensemble du système et constitue de préférence au moins 0,1 % en poids et, en particulier, environ 1 à 8 % en poids de l'ensemble du système.

21. Mélanges complexes selon les revendications 1 à 20, caractérisés en ce que les composants du système activateur sont mis en oeuvre à peu près dans les rapports de quantités suivants, en % en poids par rapport au mélange des trois composants activateurs.
5 à 20, de préférence 5 à 15 % du composé métallique, respectivement 0,01 à 5, de préférence 0,05 à 2 % de métal
30 à 60, de préférence 40 à 55 % du composé amine tertiaire
30 à 60, de préférence 40 à 55 % de l'acide faible dissimulé

22. Mélanges complexes selon les revendications 1 à 21, caractérisés en ce que leur concentration en composants polymérisables par voie radicalaire, en particulier, leur concentration en monomères représente au moins environ 20 % en poids et, de préférence, au moins environ 40 % en poids.

23. Mélanges complexes selon les revendications 1 à 22, caractérisés en ce qu'ils présentent sous leur forme d'application une viscosité minimale d'environ 30 mPas, de préférence d'au moins environ 100 mPas et en particulier d'au moins environ 300 mPas (Brookfield).

24. Utilisation des mélanges complexes selon les revendications 1 à 23, comme système d'adhésif séchant à l'air, en particulier sous la forme d'une colle à 1 composant; conditionnée de manière à garantir sa stabilité au stockage.

25. Utilisation des mélanges de substances actives selon les revendications 1 à 23, pour l'enduction en surface, en particulier comme système de vernis étalable au pinceau, séchant à l'air ou pour la formation de pièces moulées en matière plastique.
